# FASCICULE DE BREVET EUROPEEN

(11) **EP 0 712 102 B1**
(45) Date de publication et mention de la délivrance du brevet: **09.01.2002**
(21) Numéro de dépôt: 95402424.6
(22) Date de dépôt: 31.10.1995
(51) Int. Cl.: G08B 13/24, G07C 9/00, G01V 15/00

(54) **Dispositif et procédé de télésurveillance d'objets déposés dans un local**
Verfahren und Vorrichtung zur Fernüberwachung von in einem Raum abgelegten Gegenständen
Method and device for remote monitoring of objects placed in a room

(30) Priorité: 04.11.1994 FR 9413232
(43) Date de publication de la demande: 15.05.1996
(73) Titulaire: RAIMBAULT, Pierre, 75008 Paris (FR)
(72) Inventeur: Raimbault, Pierre, 75008 Paris (FR); Goupil, Jean, 78740 Vaux sur Seine (FR)
(74) Mandataire: Fort, Jacques

(56) Documents cités:
- DE-A- 3 604 307
- DE-A- 3 618 416
- US-A- 4 881 061

## Description

La présente invention a pour objet un dispositif de télésurveillance d'objets déposés dans un local, destiné à réduire le risque d'enlèvement d'un objet par une personne non autorisée.

L'invention trouve une application particulièrement importante, bien que non exclusive, dans la prévention des vols dans des locaux de réception temporaire de bagages mis à la disposition de voyageurs ou de clients, par exemple dans des trains ou des hôtels.

Il est en particulier difficile au possesseur d'un ou de plusieurs bagages déposés dans un compartiment de réception situé à l'extrémité d'une voiture de veiller à ce qu'ils ne soient pas enlevés par un tiers soit par erreur, soit par malveillance.

On connait déja (DE-A-36 04 307) un système de télésurveillance d'un ou plusieurs objets ayant un dispositif de surveillance qui émet des codes mémorisés correspondant à des récepteurs - repondeurs placés sur les objets. Une alarme est déclenchée en cas de non-réponse de l'objet, sauf si le dispositif reçoit une information d'un laissez-passer placé dans le faisceau du dispositif.

Dans ce but, l'invention propose notamment un dispositif de télésurveillance suivant la revendication 1.

Le dispositif est susceptible de nombreux modes de réalisation.

Lorsque par exemple l'emplacement est constitué par un local de stockage mis à la disposition de l'usager (client d'hôtel, voyageur en place dans une voiture), le lecteur émet des séquences successives de codes d'interrogation permettant d'obtenir en retour la signature de toutes les étiquettes d'objets et de tous les articles d'habilitation susceptibles d'être présents dans le local, relève la première réponse de chaque étiquette d'objet présente et la mémorise, puis vérifie périodiquement la présence de ladite étiquette et celle de l'article portable d'identification associé et émet une alarme en cas de non-réponse de l'étiquette d'objet en l'absence de réponse préalable ou simultanée de l'article d'habilitation.

Le lecteur peut être prévu pour effacer de sa mémoire la signature de l'étiquette d'objet après constatation de la non-réponse de cette étiquette, avec constatation préalable ou simultanée de la réponse de l'article portable correspondant, cette situation étant supposée correspondre à un enlèvement licite de l'objet.

Dans le cas où un seul objet peut être associé à chaque article portable d'habilitation, l'étiquette d'objet et l'article portable peuvent présenter la même signature, plus un bit supplémentaire ayant une valeur de 0 ou de 1 pour l'étiquette, une valeur de 1 ou de 0 pour l'article d'habilitation. Si plusieurs objets sont susceptibles d'être affectés à un même article d'habilitation, les objets peuvent avoir des signatures identiques, sauf en ce qui concerne 1, 2 ou 3 bits permettant d'effectuer une surveillance sur plusieurs objets appartenant au même usager.

L'invention propose également des ensembles étiquette d'objet-article d'habilitation utilisables dans un dispositif du genre décrit ci-dessus, remis ensemble à un usager. Dans le cas par exemple d'un voyageur, ce dernier peut recevoir, avec son billet ou par un achat séparé, un ensemble constitué par une carte découpable en deux parties (ou davantage) dont l'une contient l'étiquette d'objet qu'il insèrera à l'intérieur du bagage et dont l'autre ou chaque autre constitue un article portable d'habilitation qu'il conservera sur lui.

L'invention est susceptible de nombreuses autres variantes de réalisation. En particulier, le dispositif peut être prévu pour exercer non pas une surveillance volumique dans un local, mais une surveillance locale d'un passage d'accès à l'emplacement de stockage. Dans ce cas, du fait qu'une différenciation entre l'entrée et la sortie d'une étiquette d'objet impliquerait une complication considérable du dispositif, le dispositif sera généralement prévu pour fonctionner avec l'hypothèse que la première détection de l'étiquette d'objet correspond à l'introduction de l'objet dans le local de réception d'objet. Il y aura mémorisation de la signature de l'étiquette d'objet lors du premier passage et le critère de surveillance sera le suivant : une seconde détection de passage de l'étiquette d'objet par l'accès doit s'accompagner de la détection simultanée de la signature de l'article portable d'habilitation correspondant.

L'invention présente de nombreux avantages par rapport aux systèmes de consigne : il n'y a aucune action à effectuer par l'usager ou par un préposé pour mettre des objets en surveillance. L'usager peut retirer un ou plusieurs de ses bagages à tout moment du local et les y remettre sans avoir à effectuer une action sur le dispositif. La surveillance cesse automatiquement sur l'objet lorsque le porteur de l'article d'habilitation se trouve dans le local (en cas de surveillance volumique) ou une fois qu'un objet a été retiré de façon licite (en cas de surveillance d'accès).

L'alarme peut prendre des formes très diverses. Il peut s'agir d'une simple alarme sonore. Il peut également y avoir non seulement une alarme indifférenciée, mais fourniture d'informations, par exemple affichage, dans des compartiments de voiture occupés par les usagers, d'un nom ou d'un terme choisi par l'usager et écrit dans une mémoire de l'étiquette lors de la remise de celle-ci.

Pour réduire la durée de chaque séquence d'interrogation, le dispositif utilise avantageusement une interrogation bit à bit, ou chiffre par chiffre, à partir du bit ou du chiffre de poids le plus fort, en éliminant toute interrogation sur les nombres commençant par le chiffre ou le bit, lorsqu'aucune des étiquettes de l'objet ne commence par ce bit ou chiffre. On peut notamment utiliser une séquence du genre décrit et revendiqué dans le document WO-A-90 6 051.

L'invention propose également un procédé de télésurveillance d'objets placés dans un local, suivant lequel :
a) on munit chacun des objets d'une étiquette non accessible contenant des moyens pour recevoir de l'énergie à haute fréquence, ou disposant d'une source d'énergie interne (pile ou batterie) et un microcircuit ayant des moyens pour émettre un message à haute fréquence en réponse à la réception d'un code haute fréquence d'interrogation respectif, sous forme d'un mot de plusieurs bits, le code d'interrogation représentant une signature particulière à l'article respectif ;
b) on munit un porteur légitime de l'objet, ou des objets, d'un article contenant un microcircuit ayant des moyens pour émettre un message à haute fréquence en réponse à la réception d'un code d'interrogation à haute fréquence sous forme d'un mot ayant plusieurs bits, le code d'interrogation étant représentatif d'une signature particulière au porteur et ayant une relation bi-univoque avec le code du microcircuit de l'étiquette ;
c) on génère une séquence d'interrogation dans le local, sous forme d'un signal haute fréquence d'interrogation et de fourniture d'énergie (si nécessaire), ce signal contenant en séquence les codes d'interrogation spécifiques de toutes les étiquettes d'objet et de tous les articles d'habilitation susceptibles d'être présents dans le local ;
d) on collecte chaque message haute fréquence provenant de réponse du local et on l'adresse à des circuits de mémorisation des messages en réponse, et
e) on détermine la relation de temps éventuelle entre la réception du message provenant de l'article d'habilitation et la réception du message provenant de l'étiquette (ou des étiquettes) d'habilitation associée(s).

Les séquences c), d) et e) peuvent comporter une première interrogation permettant de déterminer s'il y a au moins une étiquette et/ou un article d'identification dont le code d'interrogation comporte au moins un bit ou un chiffre prédéterminé ; si un message est reçu en réponse à ladite première interrogation, on effectue une seconde interrogation permettant de déterminer s'il y a au moins une étiquette d'identification et/ou un article d'identification dont le code d'interrogation comporte ledit premier bit (ou chiffre) prédéterminé et au moins un autre bit ou chiffre ; et on répète les étapes ci-dessus, chaque fois avec davantage de bits, jusqu'à ce que le dernier bit du code d'interrogation ait été inclus.

Les caractéristiques ci-dessus ainsi que d'autres, avantageusement utilisables en liaison avec les précédentes, mais pouvant l'être indépendamment, apparaîtront mieux à la lecture de la description qui suit d'un mode particulier de réalisation de l'invention, donné à titre d'exemple non limitatif.

La description se réfère aux dessins qui l'accompagnent, dans lesquels :
- la figure 1 est un schéma de principe d'un dispositif, un seul ensemble étiquette d'objet-article d'habilitation étant montré ;
- la figure 2 montre une constitution matérielle possible de l'ensemble étiquette d'objet-article d'habilitation.

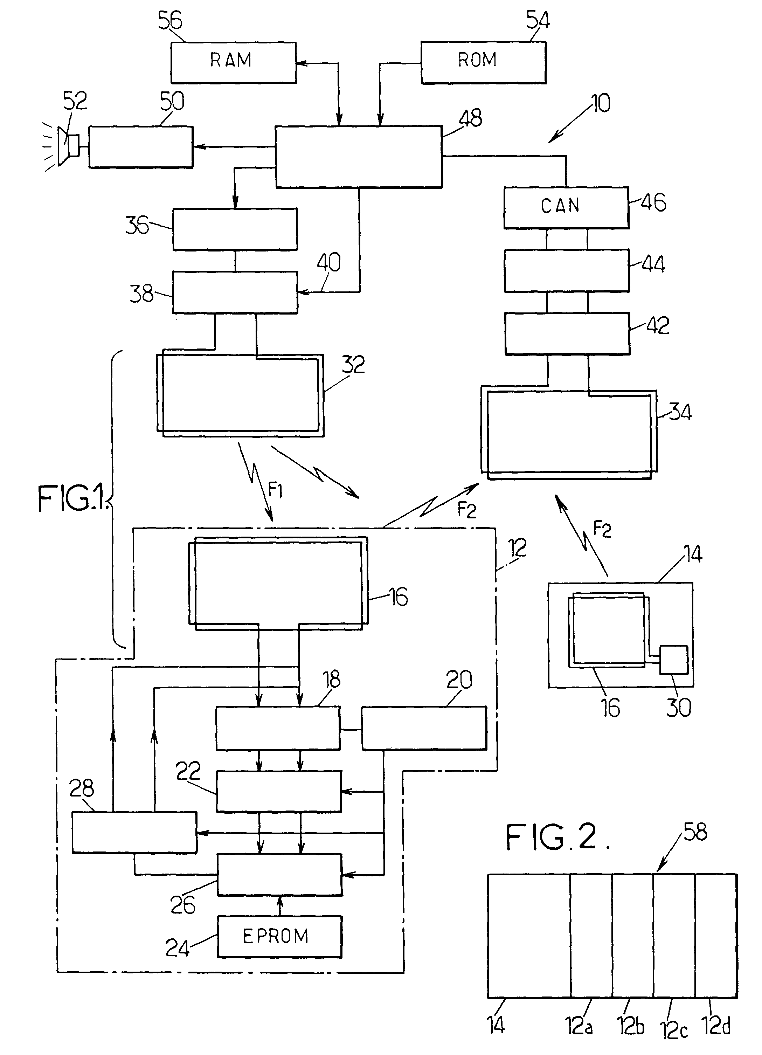

Le dispositif dont la constitution de principe est montrée en figure 1 comporte un lecteur 10 de surveillance d'une zone déterminée (local de réception de bagages par exemple) et, pour chaque objet à surveiller (le terme "objet" devant être interprété de façon large et pouvant notamment s'étendre à un animal), une étiquette d'objet 12 et un article d'habilitation portable 14. Ce dernier peut être affecté à uneou plusieurs plusieurs étiquettes d'objet 12.

Chaque étiquette d'objet 12 peut se présenter sous forme d'une carte de petite taille, comparable à celle d'une carte de crédit. Elle contient une boucle de réception et d'émission 16, constituant antenne, à laquelle on donne une surface aussi élevée que possible compatible avec la taille de l'étiquette. Cette boucle a plusieurs fonctions. Elle collecte éventuellement l'énergie nécessaire, à partir du rayonnement haute fréquence du lecteur. Elle permet de récupérer le message numérique reçu. Elle transmet la réponse de l'étiquette.

Si l'énergie n'est pas fournie par une pile ou une batterie, la boucle 16 peut alimenter un circuit d'alimentation 18 comportant un redresseur (faisant éventuellement office de multiplicateur de tension), associé avec un limiteur de surtension, pour éviter d'endommager le microcircuit contenu dans l'étiquette, en cas de tension reçue excessive.

Ce circuit d'alimentation est associé à des moyens 20 de stockage d'énergie, qui peuvent être constitués par un condensateur. Dans la pratique, il suffit d'une capacité fournissant l'énergie nécessaire à l'émission d'un signal de quelque millisecondes au plus.

Une partie de l'énergie reçue par le circuit d'alimentation est transmise à un démodulateur 22 destiné à décoder les messages d'interrogation envoyés par le lecteur. Chaque message comporte un en-tête d'initialisation, une partie donnant la valeur d'au moins un chiffre de code (par exemple chiffre le plus significatif, puis chiffre suivant et ainsi de suite) et une zone finale de déblocage des réponses des étiquettes. Le message d'interrogation envoyé par le lecteur peut contenir également des bits de contrôle, permettant de vérifier que le message démodulé, puis décodé, n'est pas entaché d'erreur.

L'étiquette comporte également une mémoire de code 24, qui est généralement une mémoire morte électriquement programmable. Le code contenu en mémoire comporte un code de base de plusieurs chiffres qui est commun à l'étiquette et à l'article d'habilitation associé et qui est également commun pour différents bagages associés à un même article d'habilitation. Le code comporte de plus un préfixe ou un suffixe permettant de distinguer l'article d'habilitation des étiquettes associées.

La capacité de la mémoire 24 peut être choisie suffisante pour autoriser l'inscription d'un mot choisi par le porteur. Ce mot n'est pas utilisé dans la surveillance, mais, en cas d'alarme, il permet un affichage précisant, à l'intention des porteurs d'article d'habilitation, quel est l'objet enlevé.

L'écriture dans la mémoire de code est protégée et, en général, elle sera effectuée sur un appareillage non disponible pour les utilisateurs, avant remise de l'étiquette et de l'article d'habilitation, soit à un guichet, soit de façon aléatoire avant tout début de distribution. Le mot supplémentaire d'individualisation pourra en revanche être inscrit soit à la remise de l'ensemble étiquette-article d'habilitation, soit par l'usager lui-même sur un appareil mis à sa disposition.

Le nombre de chiffres du code de base sera généralement au moins égal à 7, pour réduire la probabilité que deux porteurs aient simultanément le même code. Il est également possible de constituer un code de base en deux parties, l'une aléatoire, l'autre fournissant une indication correspondant à l'emplacement ou à la date d'utilisation (par exemple donnant l'identification d'un train pour lequel un billet vient d'être délivré).

Le circuit comprend encore un processeur 26, câblé ou microprogrammé, qui traite les données provenant du démodulateur 22 et de la mémoire de code 24, qui détermine une concordance éventuelle et, dans la mesure où il y a une concordance totale (identité du code de base et présence du préfixe indiquant le bagage concerné) ou partielle (en cas d'une interrogation sur certains seulement des chiffres), envoie un ordre de réponse à un oscillateur 28, destiné à émettre une réponse prédéterminée, qui peut être constituée par un train bref d'oscillations à une fréquence F2 différente de la fréquence d'interrogation F1, ou par une séquence prédéterminée modulant l'autre fréquence F2.

L'article d'habilitation 14 a la même constitution que l'étiquette d'objet 12. Il comprend également une boucle inductive 16 d'émission et de réception et un microcircuit électronique 30.

Le lecteur 10, installé à poste fixe, a pour fonction d'effectuer une scrutation permanente des articles d'habilitation et des étiquettes d'objets. Celui qui est représenté à titre d'exemple en figure 1, comporte une boucle d'émission 32 capable, si nécessaire, de créer un champ à fréquence F1 suffisant pour téléalimenter les étiquettes d'objet 12 et les articles d'habilitation 14 placés dans le local et une boucle de réception 34, pouvant être remplacée par une ou des antennes, destinées à capter les réponses à haute fréquence F2. Les boucles 32 et 34 peuvent être confondues. Dans d'autres cas, et notamment lorsque le local à surveiller présente un volume important, il peut être nécessaire de constituer le lecteur de plusieurs parties, afin qu'un champ suffisant soit créé dans l'ensemble du local. Il peut également être utile d'adopter cette disposition, pour qu'aucune boucle ne puisse se trouver, par rapport au champ d'émission, dans une orientation telle qu'elle ne collecte pas assez d'énergie.

La boucle d'émission 32 est alimentée par un générateur 36 à haute fréquence F1, par l'intermédiaire d'un modulateur 38 qui reçoit les codes successifs à émettre sur une entrée 40. La boucle de réception 34 attaque un amplificateur de réception 42, accordé sur la fréquence F2 émise par les étiquettes et par les articles d'habilitation, suivi d'un démodulateur 44 et éventuellement d'un bloc échantillonneur et convertisseur analogique-numérique 46 permettant de restituer l'information contenue dans les messages de réponse. L'ensemble du système est géré par un micro-ordinateur 48 qui commande le générateur 36, le micro-ordinateur coupe l'émission en dehors des périodes d'interrogation, de façon à permettre l'observation des réponses. Il commande le modulateur 38 et des organes d'alarme, qui peuvent comporter des afficheurs 50 et des avertisseurs sonores 52.

Le micro-ordinateur 48 comporte une mémoire morte 54 contenant le programme de surveillance et une mémoire vive 56 dans laquelle peuvent notamment être stockés provisoirement les codes d'identification des étiquettes dont la présence a été constatée.

Le programme peut notamment être le suivant, après une initialisation effaçant la liste des bagages à surveiller en mémoire 56.
1°) Scrutation :
   Une séquence complète permet d'identifier toutes les étiquettes d'objet et tous les articles d'identification présents dans le local, et de les mémoriser en 56.
2°) Analyse. L'analyse porte :
   (a) sur chacun des articles d'habilitation présents dans le local, inscrits en mémoire.
      noter l'heure de présence HPRES
      chercher toutes les étiquettes de même code de base
      SI une telle étiquette est inscrite, ALORS continuer,
      SINON, ALORS l'inscrire en mémoire 56.
   (b) Pour chacune des étiquettes à surveiller, inscrites en mémoire
      SI l'étiquette a été identifiée lors de la scrutation, ALORS continuer
      SINON *(l'étiquette n'est plus dans le local)*
      ALORS noter l'heure HDIS
      SI HDIS - HPRES > to
      ou SI HPRES - HDIS > t1
      ALORS afficher une alarme.
      SINON, ALORS effacer l'étiquette de la liste à surveiller.
   (c) Revenir à SCRUTATION.

Si HDIS - HPRES est supérieur à une valeur déterminée to, généralement choisie de quelques secondes, cela signifie que l'objet est sorti du local largement après le porteur de l'article d'habilitation ; si HPRES - HDIS est supérieur à une valeur t1, qui peut être également de quelques secondes, cela signifie que l'objet est sorti largement avant le porteur habilité, ce qui justifie une alarme. Si enfin les valeurs to et tl ne sont pas dépassées, cela signifie que le porteur vient de reprendre l'objet ou l'un des objets qui lui sont affectés.

Comme on l'a indiqué plus haut, la scrutation est avantageusement faite de façon progressive, de façon à ne pas avoir à interroger tous les codes. La réponse affirmative d'une étiquette ou d'un article d'habilitation peut s'effectuer par une simple émission radioélectrique brève (la réponse négative consistant alors en une absence de réponse), puisqu'il n'est pas nécessaire d'effectuer la distinction entre une ou plusieurs réponses simultanées. Il est toutefois également possible de prévoir des réponses permettant de lever le doute.

La progressivité de l'interrogation est assurée en émettant tout d'abord un nombre N de chiffres faibles du code, suivi d'un code constituant un ordre de déblocage des réponses. En cas d'absence de réponse, indiquant qu'il n'y a dans le local aucune étiquette et aucun article d'habilitation commançant par les N chiffres, l'interrogation peut être reprise avec N chiffre représentant un nombre différent. De proche en proche, on arrive ainsi jusqu'à un code complet, pour lequel une seule étiquette d'objet ou un seul article d'identification (l'un et l'autre désignés par la suite par DTI, c'est-à-dire Dispositif de TéléIdentification), fournit une réponse. A titre d'exemple, on donnera maintenant la séquence d'interrogation dans le cas d'un code de base de trois chiffres, en un moment où le local contient quatre DTI avec les codes 123, 125, 321, 630.

On supposera également que les DTI sont prévus de façon que leur réponse soit inhibée dès que leur code a été complètement identifié, de sorte qu'ils ne répondent plus jusqu'à réception d'une commande d'initialisation envoyée par le lecteur au début d'une nouvelle séquence de scrutation.

| Numéro du test | Nbre de chiffres | Numéro testé | Réponse des DTI | Commentaire |
|---|---|---|---|---|
| 1 | 1 | 0 | non | il n'y a pas de DTI de 000 à 099 |
| 2 | 1 | 1 | oui | DTI 123 et 125 |
| 3 | 2 | 1 0 | non | |
| 4 | 2 | 1 1 | non | |
| 5 | 2 | 1 2 | oui | DTI 123 et 125 |
| 6 | 3 | 1 2 0 | non | |
| 7 | 3 | 1 2 1 | non | |
| 8 | 3 | 1 2 2 | non | |
| 9 | 3 | 1 2 3 | oui | **DTI 123 RECONNU,BLOCAGE** |
| 10 | 2 | 1 2 | oui | DTI 125 |
| 11 | 3 | 1 2 4 | non | |
| 12 | 3 | 1 2 5 | oui | **DTI 125 RECONNU, BLOCAGE** |
| 13 | 2 | 1 2 | non | (pas d'autre DTI de 120 à 129) |
| 14 | 1 | 1 | non | (pas d'autre DTI de 100 à 199) |
| 15 | 1 | 2 | non | (pas de DTI de 200 à 299) |
| 16 | 1 | 3 | oui | DTI 321 |
| 17 | 2 | 3 0 | non | |
| 18 | 2 | 3 1 | non | |
| 19 | 2 | 3 2 | oui | DTI 321 |
| 20 | 3 | 3 2 0 | non | |
| 21 | 3 | 3 2 1 | oui | **DTI 321 RECONNU, BLOCAGE** |
| 22 | 2 | 3 2 | non | (pas d'autre DTI de 320 à 329) |
| 23 | 1 | 3 | non | (pas d'autre DTI de 300 à 399) |
| 24 | 1 | 4 | non | |
| 25 | 1 | 5 | non | |
| 26 | 1 | 6 | oui | DTI 630 |
| 27 | 2 | 6 0 | non | |
| 28 | 2 | 6 1 | non | |
| 29 | 2 | 6 2 | non | |
| 30 | 2 | 6 3 | oui | DTI 630 |
| 31 | 3 | 6 3 0 | oui | **DTI 630 RECONNU, BLOCAGE** |
| 32 | 2 | 6 3 | non | (pas d'autre DTI de 630 à 639) |
| 33 | 1 | 6 | non | (pas d'autre DTI de 600 à699) |
| 34 | 1 | 7 | non | (pas de DTI de 700 à 799) |
| 35 | 1 | 8 | non | (pas de DTI de 800 à 899) |
| 36 | 1 | 9 | non | (pas de DTI de 900 à 999). |

On voit que la reconnaissance des quatre DTI a demandé trente-six tests successifs seulement. Si chaque test s'effectue en 10 millisecondes, le contenu du local est identifié en 0,37 seconde. Pour un code à sept chiffres, ce qui semble suffisant pour éviter que deux articles du local aient le même code, le temps moyen serait de l'ordre de la seconde.

Lorsqu'il est nécessaire de réduire encore la durée de chaque séquence, le nombre d'interrogations peut être encore diminué en utilisant un test dichotomique : "sachant qu'un ou plusieurs DTI ont un code qui commence par quatre chiffres A, B, C, D, y a-t-il un DTI dont le chiffre suivant est inférieur à 5 ?. L'utilisation d'un tel test peut permettre d'éliminer cinq interrogations immédiatement ultérieures, si aucun DTI ne commence par ABCD0, ABCD1, ABCD2, ABCD3 ou ABCD4.

Comme cela a été indiqué plus haut, le procédé et le dispositif peuvent être également utilisés pour surveiller non plus l'intérieur d'un local, mais le passage par un accès ; il est même possible de déterminer le sens de passage en prévoyant deux emplacements successifs de détection sur le trajet parcouru, ces deux emplacements étant par exemple matérialisés par des portiques portant les lecteurs.

Les étiquettes 12a, 12b, etc ... et l'article d'habilitation 10 peuvent être remis à un utilisateur sous forme d'une carte 58 (figure 2) destinée à être fractionnée en plusieurs tronçons. Chacun de ces tronçons constitue un DTI et tous les DTI comportent le même code de base. Au moment de la remise, les inscriptions en mémoire morte peuvent être complétées par une indication (nom, pseudonyme, mnémonique), choisi par l'utilisateur. Toute indication sera inscrite dans les étiquettes et pourra être affichée en cas d'alarme.

## Revendications

1. Dispositif de télésurveillance d'objets déposés à un emplacement, destiné à réduire le risque d'enlèvement d'un objet par une personne non autorisée, comprenant:
d'une part, des ensembles constitués chacun de :
- au moins une étiquette (12) de télé-identification d'objet destinée à être placée dans l'objet et contenant un microcircuit alimenté par pile ou batterie, des moyens (16) de collecte d'énergie haute fréquence et des moyens (20) de stockage d'une énergie suffisante ainsi collectée pour permettre le fonctionnement du microcircuit, et des moyens (28) d'émission d'un signal haute fréquence, en réponse à la réception d'un code d'interrogation, propre à l'étiquette d'objet et indiquant qu'il s'agit d'une étiquette d'objet, constitué par une modulation de porteuse à haute fréquence, et
- un article portable d'habilitation (14) destiné à un porteur, contenant également une source d'énergie ou des moyens (16) de collecte d'énergie haute fréquence, des moyens de stockage d'une énergie suffisante collectée, et des moyens d'émission d'un signal en réponse à la réception d'un code ayant une correspondance bi-univoque avec ledit code propre à l'étiquette de télé-identification d'objet et indiquant qu'il s'agit d'un article d'habilitation, et
d'autre part, un lecteur fixe, prévu pour éventuellement émettre l'énergie haute fréquence, et capable d'émettre des séquences successives de codes d'interrogation pour obtenir en retour la signature de toutes les étiquettes d'objets et de tous les articles d'habilitation susceptibles d'être présents à l'emplacement pour relever la première réponse de chaque étiquette d'objet présente et la mémoriser et pour détecter le passage d'un état de réponse de l'étiquette de télé-identification d'objet à un état de non-réponse, alors qu'il n'y a pas de réponse de l'article d'habilitation dans un intervalle de temps déterminé par rapport audit passage.

2. Dispositif suivant la revendication 1, **caractérisé en ce que** le lecteur est prévu pour mémoriser la première réponse de chaque étiquette d'objet présente, puis pour vérifier périodiquement la présence de ladite étiquette et celle de l'article portable d'habilitation associé et émettre une alarme en cas de non-réponse de l'étiquette d'objet en l'absence de réponse préalable ou simultanée de l'article d'habilitation.

3. Dispositif selon la revendication 2, **caractérisé en ce que** le lecteur est prévu pour effacer de sa mémoire la signature de l'étiquette d'objet en cas de constatation de la non-réponse de cette étiquette après constatation de la réponse de l'article portable correspondant.

4. Dispositif selon la revendication 1, 2 ou 3, **caractérisé en ce que** l'étiquette d'objet et l'article portable présentent la même signature, plus au moins un bit supplémentaire ayant une première valeur pour l'étiquette, une autre valeur pour l'article d'habilitation.

5. Dispositif selon l'une quelconque des revendications 1 à 4, **caractérisé en ce que** chaque code d'interrogation comporte un en-tête d'initialisation, une partie donnant la valeur d'au moins un chiffre de code et une zone finale de déblocage des réponses des étiquettes et articles d'habilitation.

6. Dispositif suivant l'une quelconque des revendications précédentes, **caractérisé en ce que** chaque étiquette comporte une mémoire morte de code (24) de capacité suffisante pour contenir un code de base de plusieurs chiffres qui est commun à l'étiquette et à l'article d'habilitation associé, un préfixe ou un suffixe permettant de distinguer l'article d'habilitation des étiquettes associées et un mot choisi par le porteur de l'article d'habilitation.

7. Ensemble étiquette d'objet-article d'habilitation utilisable dans un dispositif conforme à l'une quelconque des revendications précédentes, comprenant un ensemble constitué par une carte découpable en au moins deux parties dont l'une contient une étiquette à insérer à l'intérieur d'un bagage et dont l'autre constitue un article portable d'habilitation destinée au porteur, les deux parties étant remises ensemble à un usager.

8. Procédé de télésurveillance d'objets placés dans un local, suivant lequel :
a) on munit chacun des objets d'une étiquette non accessible contenant une source d'énergie ou bien des moyens pour recevoir de l'énergie à haute fréquence, et un microcircuit ayant des moyens pour émettre un message à haute fréquence en réponse à la réception d'un code haute fréquence d'interrogation respectif, sous forme d'un mot de plusieurs bits, le code d'interrogation représentant une signature particulière à l'article respectif ;
b) on munit un porteur légitime de l'objet, ou des objets, d'un article contenant des moyens pour recevoir et pour émettre de l'énergie à haute fréquence et un microcircuit ayant des moyens pour émettre un message à haute fréquence en réponse à la réception d'un code d'interrogation à haute fréquence sous forme d'un mot ayant plusieurs bits, le code d'interrogation étant représentatif d'une signature particulière au porteur et ayant une relation bi-univoque avec le code du microcircuit de l'étiquette ;
c) on génère une séquence d'interrogation dans le local, sous forme d'un signal haute fréquence d'interrogation et éventuellement de fourniture d'énergie, ce signal contenant en séquence les codes d'interrogation spécifiques de toutes les étiquettes d'objet et de tous les articles d'habilitation susceptibles d'être présents dans le local ;
d) on collecte chaque message haute fréquence provenant de réponse du local et on l'adresse à des circuits de mémorisation des messages en réponse, et
e) on détermine la relation de temps éventuelle entre la réception du message provenant de l'article d'habilitation et la réception du message provenant de l'étiquette (ou des étiquettes) d'identification associée(s).

9. Procédé selon la revendication 8, **caractérisé en ce que** les séquences c) d) et e) comportent une première interrogation permettant de déterminer s'il y a au moins une étiquette et/ou un article d'habilitation dont le code d'interrogation comporte au moins un bit ou un chiffre prédéterminé ; si un message est reçu en réponse à ladite première interrogation, on effectue une seconde interrogation permettant de déterminer s'il y a au moins une étiquette d'identification et/ou un article d'habilitation dont le code d'interrogation comporte ledit premier bit (ou chiffre) prédéterminé et au moins un autre bit ou chiffre ; et on répète les étapes ci-dessus, chaque fois avec davantage de bits, jusqu'à ce que le dernier bit du code d'interrogation ait été inclus.

## Patentansprüche

1. Vorrichtung zur Fernüberwachung von an einem Ort abgelegten Objekten, die dazu bestimmt ist, die Gefahr der Entfernung eines Objekts durch eine nicht befugte Person zu verringern, umfassend:
einerseits Einheiten, die jeweils aus folgendem bestehen:
- mindestens ein Etikett (12) zur Objektfernidentifizierung, das dazu bestimmt ist, in dem Objekt angeordnet zu werden und eine durch eine Zelle oder eine Batterie versorgte Mikroschaltung, Mittel (16) zum Sammeln von Hochfrequenzenergie und Mittel (20) zum Speichern einer auf diese Weise gesammelten, für den Betrieb der Mikroschaltung ausreichenden Energie enthält sowie Mittel (28) zum Senden eines Hochfrequenzsignals als Antwort auf den Empfang eines dem Objektetikett eigenen Abfragekodes, der angibt, dass es sich um ein Objektetikett handelt, bestehend aus einer Hochfrequenz-Trägerfrequenzmodulation, und
- ein für einen Träger bestimmter tragbarer Ermächtigungsartikel (14), der ebenfalls eine Energiequelle oder Mittel (16) zum Sammeln von Hochfrequenzenergie und Mittel zum Speichern einer ausreichenden gesammelten Energie enthält, sowie Mittel zum Senden eines Signals als Antwort auf den Empfang eines Kodes, der eine eineindeutige Entsprechung mit dem dem Objektetikett eigenen Kode hat und angibt, dass es sich um einen Ermächtigungsartikel handelt, und
andererseits einen feststehenden Leser, der vorgesehen ist, um eventuell die Hochfrequenzenergie zu liefern, und aufeinanderfolgende Sequenzen von Abfragekodes senden kann, um als Antwort die Signatur von allen Objektetiketten und von allen Ermächtigungsartikeln zu erhalten, die an dem Ort vorhanden sein können, um die erste Antwort jedes vorhandenen Objektetiketts aufzunehmen und zu speichern, und um den Übergang von einem Zustand des Antwortens des Objektfernidentifizierungsetiketts auf einen Zustand des Nichtantwortens zu erfassen, während es keine Antwort des Ermächtigungsartikels in einem bezüglich dieses Übergangs festgelegten Zeitintervall gibt.

2. Vorrichtung nach Anspruch 1, **dadurch gekennzeichnet, dass** der Leser vorgesehen ist, um die erste Antwort jedes vorhandenen Objektetiketts zu speichern und dann um periodisch das Vorhandensein dieses Etiketts und des zugeordneten tragbaren Ermächtigungsartikels zu überprüfen und um im Fall des Nichtanwortens des Objektetiketts bei Fehlen einer vorhergehenden oder gleichzeitigen Antwort des Ermächtigungsartikels ein Alarmsignal zu senden.

3. Vorrichtung nach Anspruch 2, **dadurch gekennzeichnet, dass** der Leser vorgesehen ist, um in seinem Speicher die Signatur des Objektetiketts im Fall der Feststellung des Nichtantwortens dieses Etiketts nach Feststellung der Antwort des entsprechenden tragbaren Artikels zu löschen.

4. Vorrichtung nach Anspruch 1, 2 oder 3, **dadurch gekennzeichnet, dass** das Objektetikett und der tragbare Artikel dieselbe Signatur besitzen, plus mindestens einem zusätzlichen Bit, das bei dem Etikett einen ersten Wert und bei dem Ermächtigungsartikel einen anderen Wert hat.

5. Vorrichtung nach einem der Ansprüche 1 bis 4, **dadurch gekennzeichnet, dass** jeder Abfragekode einen Initialisierungskopf, einen den Wert von mindestens einer Kodeziffer liefernden Teil und einen Endbereich zur Entblockierung der Antworten der Etiketten und Ermächtigungsartikel aufweist.

6. Vorrichtung nach einem der vorhergehenden Ansprüche, **dadurch gekennzeichnet, dass** jedes Etikett einen Kode-Festspeicher (24) mit ausreichender Kapazität aufweist, um einen Basiskode aus mehreren Ziffern, der dem Etikett und dem zugeordneten Ermächtigungsartikel gemeinsam ist, ein Präfix oder ein Suffix, das die Unterscheidung des Ermächtigungsartikels von den zugeordneten Etiketten gestattet, und ein vom Träger des Ermächtigungsartikels gewähltes Wort zu enthalten.

7. Aus Objektetikett und Ermächtigungsartikel bestehende Einheit, die in einer Vorrichtung nach einem der vorhergehenden Ansprüche verwendbar ist und eine Einheit umfasst, die aus einer Karte besteht, die in mindestens zwei Teile zerschneidbar ist, deren einer ein Etikett enthält, das in das Innere eines Gepäckstücks einzufügen ist, und deren anderer einen für den Träger bestimmten, tragbaren Ermächtigungsartikel bildet, wobei diese beiden Teile zusammen einem Benutzer übergeben werden.

8. Verfahren zur Fernüberwachung von in einem Raum angeordneten Objekten, bei welchem
a) man jedes der Objekte mit einem nicht zugänglichen Etikett versieht, das eine Energiequelle oder Mittel zur Aufnahme von Hochfrequenzenergie und eine Mikroschaltung mit Mitteln zum Senden einer Hochfrequenzmeldung als Antwort auf dem Empfang eines jeweiligen Hochfrequenz-Abfragekodes in Form eines Worts aus mehreren Bits enthält, wobei der Abfragekode eine dem jeweiligen Artikel eigene Signatur darstellt;
b) man einen befugten Träger des Objekts oder der Objekte mit einem Artikel ausstattet, der Mittel zum Empfangen und zum Senden von Hochfrequenzenergie und eine Mikroschaltung mit Mitteln zum Senden einer Hochfrequenz-Meldung als Antwort auf den Empfang eines Hochfrequenz-Abfragekodes in Form eines Worts aus mehreren Bits enthält, wobei der Abfragekode für eine dem Träger eigene Signatur repräsentativ ist und eine eineindeutige Beziehung mit dem Kode der Mikroschaltung des Etiketts hat;
c) man in dem Raum eine Abfragesequenz in Form eines Hochfrequenz-Abfragesignals und ggf. einer Energielieferung erzeugt, wobei dieses Signal in Sequenz die spezifischen Abfragekodes von allen Objektetiketten und von allen Ermächtigungsartikeln enthält, die in dem Raum anwesend sein können;
d) man jede aus dem Raum als Antwort kommende Hochfrequenz-Meldung sammelt und sie zu Schaltungen zur Speicherung der Antwortmeldungen leitet, und
e) man die eventuelle Zeitbeziehung zwischen dem Empfang der vom Ermächtigungsartikel kommenden Meldung und dem Empfang der von dem zugeordneten Identifikationsetikett bzw. -etiketten kommenden Meldung bestimmt.

9. Verfahren nach Anspruch 8, **dadurch gekennzeichnet, dass** die Sequenzen c), d) und e) eine erste Abfrage umfassen, die es gestattet, zu bestimmen, ob es mindestens ein Etikett und/oder einen Ermächtigungsartikel gibt, dessen Abfragekode mindestens ein vorbestimmtes Bit oder eine vorbestimmte Ziffer umfasst; man, wenn eine Meldung als Antwort auf diese erste Abfrage erhalten wurde, eine zweite Abfrage vornimmt, die es gestattet, zu bestimmen, ob es mindestens ein Identifikationsetikett und/oder einen Ermächtigungsartikel gibt, dessen Abfragekode das erste vorbestimmte Bit (bzw. die erste vorbestimmte Ziffer) und mindestens ein anderes Bit bzw. eine andere Ziffer umfasst; und man die vorhergehenden Schritte jedes Mal mit mehr Bits wiederholt, bis das letzte Bit des Abfragekodes eingeschlossen wurde.

## Claims

1. Device for remote monitoring of objects deposited in a location, which is designed to reduce the risk of removal of an object by an unauthorised person, comprising:
- firstly, assemblies each consisting of:
- at least one label (12) for remote identification of an object, which is designed to be placed in the object, and contains a micro-circuit which is supplied by a cell or battery, means (16) for collection of high-frequency energy, and means (20) for storage of sufficient energy thus collected to permit functioning of the micro-circuit, and means (28) for emission of a high-frequency signal, in response to reception of an interrogation code which is specific to the object label and indicates that an object label is involved, constituted by high-frequency carrier modulation; and
- a portable authorisation article (14), which is designed for a holder, also containing an energy source or means (16) for collection of high-frequency energy, means for storage of sufficient energy collected, and means for emission of a signal in response to reception of a code which has bi-univocal correspondence with the said code specific to the label for remote identification of an object, and indicates that an authorisation article is involved; and
- secondly, a fixed reader, which is provided optionally in order to emit the high-frequency energy, and can emit successive sequences of interrogation codes, in order to obtain in return the signature of all the object labels, and of all the authorisation articles which may be present in the location, in order to pick up the first response of each object label present and store it, and in order to detect the passage of a state of response of the remote object identification label, to a state of non-response, when there is no response by the authorisation article in an interval of time which is determined in relation to the said passage.

2. Device according to claim 1, **characterised in that** the reader is provided in order to store the first response of each object label present, then in order to check periodically for the presence of the said label and that of the associated portable identification article, and to emit an alarm in the event of non-response of the object label, in the absence of a prior or simultaneous response of the authorisation article.

3. Device according to claim 2, **characterised in that** the reader is designed to erase the signature of the object label from its memory, in the event of determination of non-response of this label, after determination of the response of the corresponding portable article.

4. Device according to claim 1, 2 or 3, **characterised in that** the object label and the portable article have the same signature, plus at least one additional bit with a first value for the label, and another value for the authorisation label.

5. Device according to any one of claims 1 to 4, **characterised in that** each interrogation code comprises an initialisation header, a part which provides the value of at least one code digit, and a final area for release of the responses of the authorisation labels and articles.

6. Device according to any one of the preceding claims, **characterised in that** each label comprises a read only code memory (24), with a capacity sufficient to contain a base code with a plurality of digits, which is common to the label and to the associated authorisation article, a prefix or a suffix making it possible to distinguish the authorisation article of the associated labels, and a word selected by the holder of the authorisation article.

7. Object label - authorisation article assembly, which can be used in a device according to any one of the preceding claims, comprising an assembly constituted by a card which can be cut into at least two parts, one of which contains a label to be inserted inside a piece of luggage, and the other constitutes a portable authorisation article which is designed for the holder, the two parts being supplied together to a user.

8. Method for remote monitoring of objects placed in a location, according to which:
a) each of the objects is provided with a non-accessible label containing a source of energy, or means for receiving high-frequency energy, and a micro-circuit with means to emit a high-frequency message in response to reception of a respective high-frequency interrogation code, in the form of a word with a plurality of bits, the interrogation code representing a signature which is specific to the respective article;
b) a legitimate holder of the object(s) is provided with an article containing means for receiving and emitting high-frequency energy, and a micro-circuit with means for emitting a high-frequency message in response to reception of a high-frequency interrogation code in the form of a word with a plurality of bits, the interrogation code being representative of a signature which is specific to the holder, and having a bi-univocal relationship with the code of the micro-circuit of the label;
c) an interrogation sequence is generated in the location, in the form of a high-frequency signal for interrogation and optionally for supply of energy, this signal containing in sequence the specific interrogation codes for all the object labels and for all the authorisation articles which may be present in the location;
d) each high-frequency message obtained as a response from the location is collected, and addressed to circuits for storage of the response messages; and
e) there is determination of any time relationship between reception of the message obtained from the authorisation article, and reception of the message obtained from the associated authorisation label (or labels).

9. Method according to claim 8, **characterised in that** the sequences c), d) and e) comprise a first interrogation, which makes it possible to determine whether there is at least one label and/or one identification article, the interrogation code of which comprises at least one pre-determined bit or digit; if a message is received in response to the said first interrogation, a second interrogation is carried out, which makes it possible to determine whether there is at least one identification label and/or one identification article, the interrogation code of which comprises the said first pre-determined bit (or digit), and at least one other bit or digit; and the above-described steps are repeated, each time with an increasing number of bits, until the last bit of the interrogation code has been included.
